# EUROPEAN PATENT APPLICATION

(11) **EP 4 776 577 A1**
(43) Date of publication of application: **15.07.2026**
(21) Application number: 23951045.6
(22) Date of filing: 06.09.2023
(51) Int. Cl.: H04L 12/28, H04L 12/46

(54) **COMMUNICATION SYSTEM**

(71) Applicant: Nissan Motor Co., Ltd., Yokohama-shi, Kanagawa 221-0023 (JP)
(72) Inventor: NISHIMOTO, Akira, Atsugi-shi, Kanagawa 243-0123 (JP); KOBAYASHI, Makoto, Atsugi-shi, Kanagawa 243-0123 (JP)
(74) Representative: Osha BWB
(86) International application number: PCT/JP2023/032495
(87) International publication number: WO 2025/052571

(57) **Abstract**

A communication system includes a domain controller 10 connected to a bus 10a in a global area 100 and a bus 10b in a local area 201, an ECU (for example, a domain controller 20) that belongs to the global area 100, and an ECU (for example, ECUs 11, 12) that belongs to the local area 201. A data frame 31 includes a CAN ID (ID: 100) and a control information (control information subject to processing by, for example, the domain controller 20), a data frame 32 includes a CAN ID (ID: 100) and a control information (control information subject to processing by the ECU 11), and the CAN ID of the data frame 31 and the CAN ID of the data frame 32 are the same ID.

## Description

### Technical Field

The present invention relates to a communication system that transmits and receives a data frame via a communication network.

### Background Art

An in-vehicle network system as described in Patent Document 1 is known as a message processing technology for relaying messages between electronic control units. In this in-vehicle network system, a gateway includes a reception unit that sequentially receives a frame of a first type from a bus of a network of a CAN, a determination unit that determines whether or not to transmit data of the frame of the first type regarding the frame of the first type received by the reception unit to an Ethernet (registered trademark) network, and a transmission unit that transmits, to the Ethernet network, a frame of a second type including respective pieces of data regarding a plurality of frames of the first type determined by the determination unit to be transmitted to the Ethernet network.

### Prior Art Document

### Patent Document

Patent Document 1: WO2017/203902

### Summary of Invention

### Problems to be Solved by Invention

With the increasing complexity of electronic control systems in recent years, the number of IDs of frames transmitted and received between electronic control units (ECUs) is increasing. While in the in-vehicle network system disclosed in Patent Document 1, the frame of the first type is transmitted and received over the network of the CAN, the number of frame IDs in the CAN has an upper limit, and therefore, there is a problem of an insufficient number of frame IDs usable in the network.

An object to be achieved by the present invention is to provide a communication system that allows for increasing the number of usable frame IDs.

### Means for Solving Problems

The present invention solves the above-described problem with a communication system including a domain controller connected to a first bus and a second bus, a first ECU that belongs to a first network area, and a second ECU that belongs to a second network area. A first data frame communicated in the first network area includes a first frame ID and first control information, a second data frame communicated in the second network area includes a second frame ID and second control information, and the first frame ID and the second frame ID are the same ID.

### Effects of Invention

The present invention allows for increasing the number of usable frame IDs.

### Brief Description of Drawings

FIG. 1 is a block diagram of a communication system according to an embodiment of the present invention.
FIG. 2 is a block diagram illustrating the configuration of an ECU in FIG. 1.
FIG. 3 is an explanatory view illustrating the data configuration of a data frame communicated in an in-vehicle network system in FIG. 1.
FIG. 4 is a block diagram of a communication system according to another embodiment of the present invention.
FIG. 5 is a block diagram of a communication system according to another embodiment of the present invention.

### Mode(s) for Carrying out the Invention

The following describes embodiments of the present invention based on the drawings.

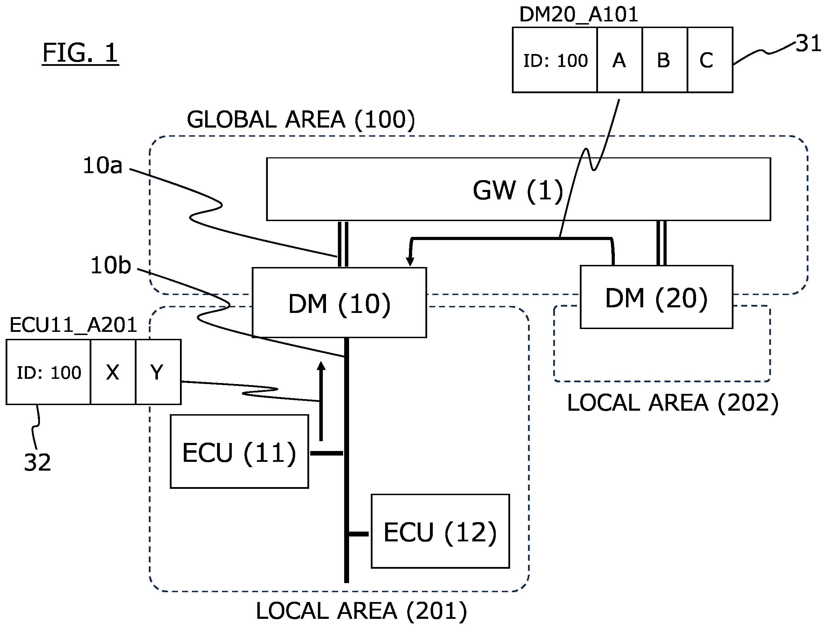

This embodiment uses an example in which a communication system according to the present invention is applied to an in-vehicle network system to give a description. As illustrated in FIG. 1, a communication system according to the embodiment includes a gateway 1, domain controllers (DMs) 10, 20, and Electronic control units (ECUs) 11, 12. The gateway 1, the domain controllers 10, 20, and the Electronic control units (ECUs) 11, 12 are connected through a CAN.

A communication network in which the communication system according to the embodiment is disposed includes a global area 100 and local areas 201, 202. The global area 100 is a relay area when a data frame is transmitted and received between a plurality of the local areas 201, 202, and is located in an upper layer with respect to the plurality of local areas 201, 202. The local areas 201, 202 are areas corresponding to functional domains of a vehicle. The functional domains of the vehicle are classifications that are grouped by function, such as a power train and an autonomous driving system. Domains constitute a plurality of control groups divided for each basic configuration of the vehicle.

The domain is composed of an ECU and a bus, and an exemplary domain is, for example, a multimedia domain, an Advanced Driver-Assistance System (ADAS) domain, or a power train domain. An ECU that belongs to the multimedia domain controls an information presentation device, such as a head unit, including a car navigation device. An ECU that belongs to the ADAS (Advanced Driver-Assistance System) domain controls an in-vehicle device relating to driving assistance control, such as a camera, a radar, a Light Detection and Ranging (LIDAR), and an object recognition device that performs a sensor fusion process based on outputs from the camera, the radar, and the LIDAR. An ECU that belongs to the power train domain controls, for example, a drive source of the vehicle, such as an engine and a motor.

Between ECUs that belong to the same domain, a data frame is transmittable and receivable within a single local area. On the other hand, when an ECU that belongs to one domain transmits and receives a data frame to and from an ECU that belongs to another domain, the data frame is transmitted and received via the gateway 1 and the domain controllers 10, 20 that belong to the global area 100.

At least one of the domain controllers 10, 20 is assigned to each of the local areas 201, 202. For example, the domain controller 10 is assigned to the local area 201, and the domain controller 20 is assigned to the local area 202. The gateway 1 for transferring a data frame between the plurality of local areas 201, 202 is assigned to the global area 100. That is, the communication network connects a CAN communication network in a tree form with the gateway 1 as the apex, and the domain controllers 10, 20 function as hubs in the communication network. The global area 100, the local area 201, and the local area 202 are each composed of a closed communication network. The gateway 1 and the domain controllers 10, 20 are connected to a pair of buses. When the pair of buses belong to mutually different areas, an ECU connected to the pair of buses can divide a network area. Meanwhile, as illustrated in FIG. 1, the ECUs 11, 12 are connected to the CAN communication network by one bus, and therefore do not divide a network area.

The gateway 1 is connected to a plurality of the domain controllers 10, 20 by a plurality of buses, and is an ECU that executes a relay process of a data frame between the buses. When receiving data frames from the domain controllers 10, 20 and buffering the data frames, the gateway 1 transmits the data frames to the previous ECUs (the domain controllers 10, 20) in the order in which the data frames were received or in the transmission order based on frame IDs.

The domain controllers 10, 20 aggregate a plurality of ECUs that belong to a network area, and are disposed corresponding to the functional domains of the vehicle. The domain controllers 10, 20 are ECUs that execute a relay process of a data frame in the local areas 201, 202, and a relay process of a data frame between the global area 100 and the local areas 201, 202. For example, the domain controller 10 aggregates a plurality of the ECUs 11, 12 that belong to the local area 201, and is disposed in the vehicle corresponding to the vehicle domain.

The domain controller 10 is disposed in the local area 201, and the domain controller 20 is disposed in the local area 202. The domain controller 10 is connected to a bus 10a in the global area 100, and is connected to a bus 10b in the local area 201. The domain controller 10 transfers a data frame between the ECUs 11 and 12 that belong to the local area 201. When a data frame is transmitted from the ECUs 11, 12 that belong to the local area 201 to an ECU that belongs to another local area, the domain controller 10 receives the data frame from the bus 10b, and transmits the data frame from the bus 10a to the global area 100. When a data frame is transmitted from an ECU that belongs to another local area to the ECUs 11, 12 that belong to the local area 201, the domain controller 10 receives the data frame from the bus 10a, and transmits the data frame from the bus 10b to the local area 201.

The domain controller 20 is connected to the bus 10a in the global area 100, and is connected to a bus in the local area 202. The domain controller 20 transmits and receives data frames to and from an ECU that belongs to the local area 202 similarly to the domain controller 10.

The ECUs 11, 12 are ECUs that belong to the local area 201. The ECUs 11, 12 are composed of computers including hardware and software. While the details are not illustrated, an ECU 4 includes a Read Only Memory (ROM) that stores programs, a Central Processing Unit (CPU) that executes the programs stored in this ROM, and a Random Access Memory (RAM) that temporarily stores data generated during the execution of a program. The ROM stores a control program for performing control corresponding to an in-vehicle device connected to each of the ECUs 11, 12. Note that ECUs, such as the gateway 1 and the domain controllers 10, 20, may also have similar configurations to those of the ECUs 11, 12.

The gateway 1 and the domain controllers 10, 20 are ECUs that belong to the global area 100. The domain controller 10 and the ECUs 11, 12 are ECUs that belong to the local area 201. The domain controller 20 is an ECU that belongs to the local area 202. Note that ECUs that belong to the respective areas are not limited to the ECUs illustrated in FIG. 1.

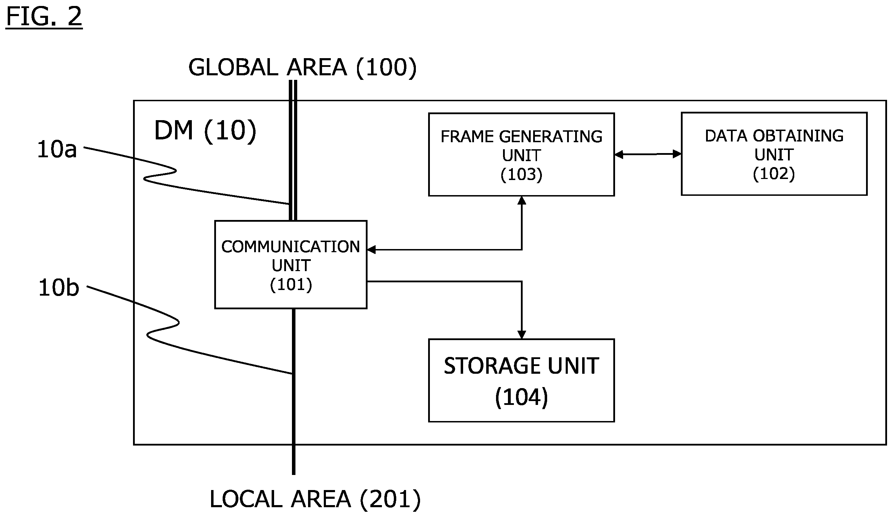

Next, with reference to FIG. 2, the configuration of an ECU, such as the domain controller 10, will be described. The domain controller 10 includes a communication unit 101, a data obtaining unit 102, a frame generating unit 103, and a storage unit 104 as function blocks.

The communication unit 101 communicates with an ECU that belongs to the same network area via the CAN. The communication unit 101 communicates with another ECU via the CAN and the gateway 1. When receiving a data frame transmitted from another ECU, the communication unit 101 confirms a CAN ID of the data frame, and receives the data frame having a preliminarily determined CAN ID.

The data obtaining unit 102 obtains sensor information indicative of a detection result by a sensor from an in-vehicle device, such as a sensor connected to the ECU. The frame generating unit 103 generates control information including the sensor information based on the sensor information obtained by the data obtaining unit 102. When a control command is output to the in-vehicle device via another ECU, the frame generating unit 103 generates control information including the control command. The control information is information subject to processing by an ECU. For example, when the control information includes vehicle speed information, the control information is processed by an ECU for controlling a power train, an ECU for controlling an autonomous driving system, or the like. Note that the control information may be processed by an ECU as a transmission source, not limited to an ECU as a transmission destination of the data frame. The frame generating unit 103 generates a data frame transmitted by the communication unit 101 based on the generated control information. Specifically, the frame generating unit 103 sets a CAN ID corresponding to the type of the sensor information obtained by the data obtaining unit 102. The frame generating unit 103 stores, for example, a table in which the sensor information and the CAN IDs are associated, and sets the CAN IDs based on this table.

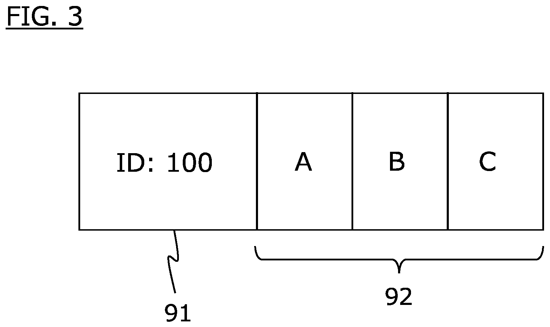

FIG. 3 illustrates an exemplary configuration of a data frame generated by the frame generating unit 103. The data frame includes an ID field 91 in which a CAN ID is stored, and a data field 92 in which data is stored. The data field 92 stores control information processed in the ECU. In the example in FIG. 3, "100" is assigned as a CAN ID, and "A," "B," and "C" are stored as types of the control information. Note that the data frame includes a Data Length Code (DLC) and the like, not limited to the CAN ID and the control information.

The storage unit 104 stores the data stored in the data frame received by the communication unit 101.

In this embodiment, the communication protocol in the global area 100 and the local areas 201, 202 is a CAN protocol. An identifier indicative of a transmission source or a transmission destination is not assigned to the data frame communicated in the CAN protocol, each ECU transmits data frames by assigning a CAN ID for each data frame, and the receiving side ECU identifies the data frame to be received from the CAN ID. The number of IDs of the CAN IDs has a determined upper limit, such as 2048. Therefore, when the CAN IDs are assigned regarding the whole communication system including the global area 100 and the local areas 201, 202 as a single communication area, the number of usable frame IDs for the data frames is unable to exceed the upper limit number of the CAN IDs. That is, the number of usable frame IDs is unable to be increased.

In this embodiment, in order to increase the number of usable frame IDs, the frame IDs are individually managed for each network to which the domain controllers 10, 20 are connected. The following describes a management method for the frame ID according to the embodiment with reference to FIG. 1. Note that in FIG. 1, a data frame 31 has a frame name "DM20_A101," and a data frame 32 has a frame name "ECU11 A201." The file names are illustrated for ease of distinguishing the frames, and the data frames do not include file name information.

In the example in FIG. 1, the domain controller 20 transmits the data frame 31. The data frame 31 includes the CAN ID (ID: 100) and the control information (A, B, C). The data frame 31 is communicated in the global area 100, and the transmission destination of the data frame 31 is the DM 10. At least one piece of the control information among three types of the control information (A), (B), (C) is subject to processing by an ECU that belongs in the global area 100.

In the global area 100, the CAN ID is managed such that an ECU at the transmission destination corresponding to the CAN ID (ID: 100) includes the DM 10. Therefore, a frame generating unit included in the domain controller 20 assigns the CAN ID (ID: 100) to the data frame 31 such that an ECU at the transmission destination of the control information (A, B, C) includes the domain controller 10. The domain controller 20 transmits the data frame 31 to the CAN communication network in the global area 100.

The ECU 11 transmits the data frame 32. The data frame 32 includes the CAN ID (ID: 100) and control information (X, Y). The data frame 32 is communicated in the local area 201 and the transmission destination of the data frame 32 is the DM 10. Any one piece of the control information among two types of the control information (X), (Y) is subject to processing by an ECU (such as the ECU 12) that belongs in the local area 201.

In the local area 201, the CAN ID is managed such that an ECU at the transmission destination corresponding to the CAN ID (ID: 100) includes the DM 10. Therefore, a frame generating unit included in the ECU 11 assigns the CAN ID (ID: 100) to the data frame 31 such that an ECU at the transmission destination of the control information (X, Y) includes the domain controller 10. The ECU 11 transmits the data frame 32 to the CAN communication network in the local area 201.

Here, the frame ID included in the data frame 31 and the frame ID included in the data frame 32 are the same ID (ID: 100). When the CAN IDs are managed regarding the whole communication system including the global area 100 and the local areas 201, 202 as a single communication area as has conventionally been done, the same frame ID is not assigned in the communication of the data frame between one group of the plurality of ECUs and the communication of the data frame between another group of the plurality of ECUs in the single communication area. On the other hand, in this embodiment, the network in the communication system is divided with the domain controllers 10, 20 as boundaries, and the frame IDs are managed for each divided area. Therefore, the same data frame can be assigned to the data frame communicated in the global area 100 and the data frame communicated in the local area 201.

When the same CAN ID is assigned between different communication areas like the data frames 31, 32, the frame ID of the data frame 31 is assigned when the plurality of ECUs (the domain controllers 10, 20) that belong to the global area 100 serve as the transmission source and the transmission destination. The frame ID of the data frame 32 is assigned when the plurality of ECUs (the domain controller 10, the ECU 11) that belong to the local area 201 serve as the transmission source and the transmission destination.

The bus 10a and the bus 10b are connected to the domain controller 10 as receivers of the data frame 31, 32. The domain controller 10 receives the data frame 31 transmitted from the domain controller 20 through the bus 10a. The domain controller 10 receives the data frame 32 transmitted from the ECU 11 through the bus 10b. Since the bus 10a is the CAN communication network in the global area 100, the data frame 31 received through the bus 10a can be identified as a data frame communicated in the global area 100. Similarly, the data frame 32 received through the bus 10b can be identified as a data frame communicated in the local area 201. The domain controller 20 can identify the transmission source of the data frame from a transmission source preliminarily determined corresponding to the frame ID. The frame ID (ID: 100) of the data frame 31 communicated in the global area 100 determines that the ECU at the transmission source is the domain controller 20 in terms of the communication management. The frame ID (ID: 100) of the data frame 32 communicated in the local area 201 determines that the ECU at the transmission source is the ECU 11 in terms of the communication management. Therefore, the domain controller 10 can identify the ECU at the transmission source from the fact that the data frame 31 is received through the bus 10a and the CAN ID assigned to the data frame 31.

As described above, the communication system according to the embodiment includes the domain controller 10 connected to the bus 10a in the global area 100 and the bus 10b in the local area 201, the ECU (for example, the domain controller 20) that belongs to the global area 100, and the ECU (for example, the ECUs 11, 12) that belongs to the local area 201. The data frame 31 includes the CAN ID (ID: 100) and a control information (the control information subject to processing by the domain controller 20 or the like), the data frame 32 includes the CAN ID (ID: 100) and a control information (the control information subject to processing by the ECU 11), and the CAN ID of the data frame 31 and the CAN ID of the data frame 32 are the same ID. This allows for increasing the number of usable frame IDs.

Note that the global area 100 corresponds to a "first network area" of the present invention, the local areas 201, 202 correspond to the "second network area" of the present invention, the ECU (for example, the domain controller 20) that belongs to the global area 100 corresponds to a first ECU, and the ECU (for example, the ECUs 11, 12) that belongs to the local areas 201, 202 corresponds to a second ECU. The CAN ID corresponds to the "frame ID" of the present invention. The control information (A, B, C) corresponds to "first control information" of the present invention, the control information (X, Y) corresponds to "second control information" of the present invention, and the CAN ID (ID: 100) corresponds to "first and second frame IDs" of the present invention.

### Second Embodiment

Next, a communication system according to a second embodiment will be described. The communication system according to the second embodiment is different from the communication system according to the above-described first embodiment in that the domain controllers 10, 20 add control of changing the frame ID (CAN ID). Control other than that is the same as the control in the first embodiment, and the above descriptions are cited for the same configurations and control as those in the first embodiment.

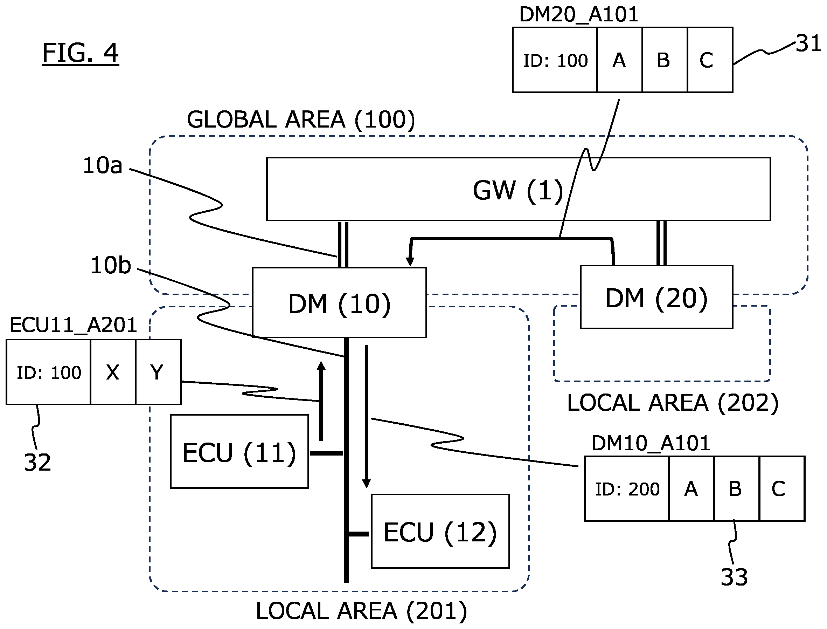

FIG. 4 is a block diagram of the communication system according to the embodiment. In the communication system illustrated in FIG. 4, the ECUs, such as the gateway 1, the network areas, and the CAN communication network are similar to those in the first embodiment.

In the example in FIG. 4, the domain controller 10 receives the data frame 31 from the domain controller 20. The control information (A, B, C) stored in the data frame 31 is information subject to processing by the ECU 12. Note that the control information (A, B, C) may be information processed by another ECU, such as the domain controller 10, and the ECU 12. The CAN ID (ID: 101) assigned to the data frame 31 is the same as the CAN ID of the data frame 32. That is, the CAN ID (ID: 101) of the data frame 31 overlaps with the frame ID (the used frame ID) used in the local area 201. When the domain controller 10 transmits the data frame including the control information (A, B, C) into the local area 201 without changing the CAN ID, a communication collision occurs with the data frame 32.

The domain controller 10 changes the CAN ID included in the data frame 31 from (ID: 100) to (ID: 200) in order to avoid such a communication collision. That is, the domain controller 10 assigns the CAN ID different from the CAN ID (ID: 100) to the data frame 31. The CAN ID (ID: 200) is an ID used in the local area 201, and is used when the data frame is transmitted from the domain controller 10 to the ECU 12. The domain controller 10 transmits a data frame 33 including the CAN ID (ID: 200) after the change and the control information (A, B, C) into the local area 201 through the bus 10b.

Thus, in this embodiment, when the data frame having the same data configuration in the data field 92 is transmitted over different communication areas (for example, when the transmission is made from the global area 100 to the local areas 201, 202), the CAN ID is changed.

As described above, in the communication system according to the embodiment, the domain controller 10 receives the data frame 31 including the CAN ID (ID: 100) and the control information subject to processing by the ECU 12 through the bus 10a, assigns the CAN ID (ID: 200) different from the CAN ID (ID: 100) to the data frame 33, and transmits the data frame 33 through the bus 10b. This allows for increasing the number of usable frame IDs.

In the communication system according to the embodiment, when the CAN ID (ID: 100) overlaps with the used frame ID used in the local area, the domain controller 10 changes the CAN ID (ID: 100) into the CAN ID (ID: 200), and transmits the data frame 33. This allows for increasing the number of usable frame IDs.

Note that the ECU (for example, the ECUs 11, 12) that belongs to the local areas 201, 202 corresponds to a "third ECU" of the present invention, the data frames 31, 33 correspond to a "third data frame" of the present invention, the control information (A, B, C) corresponds to "third control information" of the present invention, the CAN ID (ID: 100) corresponds to the "first frame ID" of the present invention, and the CAN ID (ID: 200) corresponds to a "third frame ID" of the present invention.

### Third Embodiment

Next, a communication system according to a third embodiment will be described. The communication system according to the third embodiment is different from the communication system according to the above-described second embodiment in that the domain controllers 10, 20 transmit a data frame with newly added control information. Control other than that is the same as the control in the second embodiment, and the above descriptions are cited for the same configurations and control as those in the second embodiment.

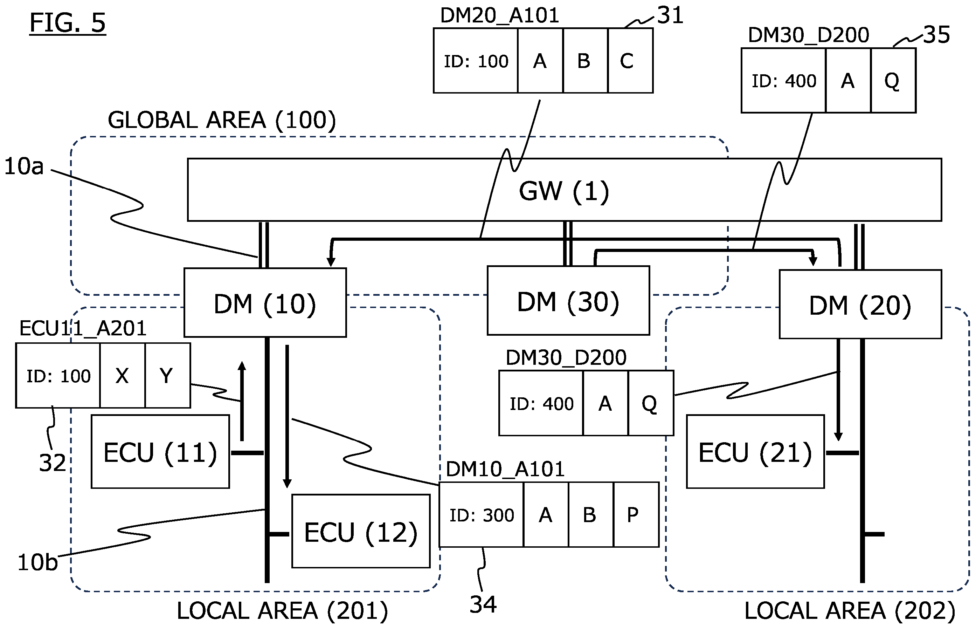

FIG. 5 is a block diagram of the communication system according to the embodiment. In the communication system illustrated in FIG. 5, the global area 100 includes a domain controller 30 in addition to the domain controllers 10, 20. The domain controller 20 and an ECU 21 belong to the local area 202.

In the example in FIG. 5, the domain controller 10 receives the data frame 31 from the domain controller 20. The control information (A, B) stored in the data frame 31 is information subject to processing by the ECU 12. On the other hand, the control information (C) stored in the data frame 31 is control information not subject to processing by the ECUs 11, 12 that belong to the local area 201, and control information subject to processing by another ECU that does not belong to the local area 201. The CAN ID (ID: 100) of the data frame 31 is used by the data frame 32, and overlaps with the frame ID (the used frame ID) used in the local area 201. Therefore, the domain controller 10 changes the CAN ID included in the data frame 31 from (ID: 100) to (ID: 300).

The control information (C) is information not subject to processing by an ECU that belongs in the local area 201, and does not need to be transmitted into the local area 201. Therefore, the domain controller 10 stores control information (P) at a position where the control information (C) has been stored in the data field. The control information (P) is information subject to processing by the ECU 12. The domain controller 10 transmits the data frame 33 including the CAN ID (ID: 300) after the change and the control information (A, B, P) into the local area 201 through the bus 10b.

As another communication example of the data frame, the domain controller 20 receives a data frame 35 from the domain controller 30. The control information (A) stored in the data frame 35 is information subject to processing by the ECU 21. Null data is stored in the data field of the data frame 35, which is partly a free space. The CAN ID (ID: 200) of the data frame 35 overlaps with the frame ID (the used frame ID) used in the local area 202. Therefore, the domain controller 10 changes the CAN ID included in the data frame 31 from (ID: 200) to (ID: 400).

The domain controller 10 stores control information (Q) at a position where null data has been stored in the data field. The control information (Q) is information subject to processing by the ECU 21. The domain controller 20 transmits a data frame 36 including the CAN ID (ID: 400) after the change and the control information (A, Q) into the local area 202.

Thus, in this embodiment, when the data frame having the same data configuration in the data field 92 is transmitted over different communication areas (for example, when the transmission is made from the global area 100 to the local area 201, 202), only required information (signal) is extracted and is transmitted as another data frame.

As described above, this embodiment includes the domain controller 10 connected to the bus 10a in the global area 100 and the bus 10b in the local area 201, the ECU (for example, the domain controller 20) that belongs to the global area 100, and the ECU (for example, the ECUs 11, 12) that belongs to the local area 201. The domain controller 10 receives the data frame 31 including the CAN ID (ID: 100) and the control information (A, B) subject to processing by the ECU 12 through the bus 10a, generates a data frame 34 including the CAN ID (ID: 300) different from the CAN ID (ID: 100), the control information (A, B), and the control information (P), and transmits the data frame 34 through the bus 10b. This allows for increasing the number of usable frame IDs.

In this embodiment, when the data frame 31 includes the control information (C) subject to processing by an ECU other than the ECUs 11, 12, the domain controller 10 changes the control information (C) into the control information (P), and generates the data frame 34. This allows for increasing the number of usable frame IDs.

In this embodiment, when the CAN ID (ID: 100) overlaps with the used frame ID used in the local area 201, the domain controller 10 changes the CAN ID (ID: 100) into the CAN ID (ID: 300), and generates the data frame 34. This allows for increasing the number of usable frame IDs.

Note that the ECU (for example, the ECUs 11, 12) that belongs to the local areas 201, 202 corresponds to the second ECU, the data frames 31, 35 correspond to a "first data frame" of the present invention, the control information (A, B) corresponds to the "first control information" of the present invention, the CAN ID (ID: 100) corresponds to the "first frame ID" of the present invention, the CAN IDs (ID: 300, 400) correspond to the "second frame ID" of the present invention, the control information (P, Q) corresponds to the "second control information" of the present invention, the control information (C) corresponds to the "third control information" of the present invention, and the data frames 34, 36 correspond to a "second data frame" of the present invention.

### Description of Reference Numerals

1 Gateway
10a, 10b Bus
10, 20, 30 Domain controller (DM)
11, 12, 21 ECU
31 to 35 Data frame
100 Global area
201, 202 Local area

## Claims

1. A communication system disposed in a communication network including a first network area and a second network area, for transmitting and receiving data, the communication system comprising:
a domain controller connected to a first bus in the first network area and a second bus in the second network area;
a first ECU that belongs to the first network area; and
a second ECU that belongs to the second network area, wherein
a first data frame communicated in the first network area includes a first frame ID and first control information subject to processing by the first ECU,
a second data frame communicated in the second network area includes a second frame ID and second control information subject to processing by the second ECU, and
the first frame ID and the second frame ID are the same ID.

2. The communication system according to claim 1, comprising
a third ECU that belongs to the second network area, wherein
the domain controller:
receives a third data frame that includes the first frame ID and third control information subject to processing by the third ECU through the first bus;
assigns a third frame ID different from the first frame ID to the third data frame; and
transmits the third data frame through the second bus.

3. The communication system according to claim 2, wherein
the domain controller changes the first frame ID into the third frame ID, and generates the third data frame when the first frame ID overlaps with a used frame ID used in the second network area.

4. The communication system according to any one of claims 1 to 3, wherein
the domain controller aggregates a plurality of ECUs that belong to the second network area, and is disposed in a vehicle corresponding to a functional domain of the vehicle.

5. The communication system according to any one of claims 1 to 4, wherein
the first frame ID is assigned when a plurality of ECUs that belong to the first network area serve as a transmission source and a transmission destination, and
the second frame ID is assigned when a plurality of ECUs that belong to the second network area serve as a transmission source and a transmission destination.

6. The communication system according to any one of claims 1 to 5, wherein
a frame ID assigned to a data frame communicated in the first network area or the second network area does not include information of a transmission destination, and
the domain controller identifies the transmission destination of the data frame from a transmission destination preliminarily determined corresponding to the frame ID.
